# EUROPEAN PATENT APPLICATION

(11) **EP 4 769 822 A1**
(43) Date of publication of application: **01.07.2026**
(21) Application number: 23953650.1
(22) Date of filing: 28.09.2023
(51) Int. Cl.: H01M 50/593, H01M 50/586, H01M 10/04

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: SU, Huasheng, Ningde, Fujian 352100 (CN); CAI, Runchen, Ningde, Fujian 352100 (CN); ZHENG, Yulian, Ningde, Fujian 352100 (CN); YANG, Rui, Ningde, Fujian 352100 (CN); JIN, Haizu, Ningde, Fujian 352100 (CN); WANG, Peng, Ningde, Fujian 352100 (CN)
(74) Representative: Gong, Jinping
(86) International application number: PCT/CN2023/122552
(87) International publication number: WO 2025/065501

(57) **Abstract**

Provided in the embodiments of the present application are a battery cell, a battery, and an electrical device. The battery cell comprises a housing, an electrode assembly, and an insulator. The electrode assembly is accommodated in the housing; the electrode assembly is formed by winding and/or stacking electrode sheets, and the electrode assembly has a first end face; and at least a portion of the insulator is arranged between the first end face and the housing; wherein at least one first through hole is formed on the part of the insulator opposite the first end face, the first through hole is a slot-shaped hole, and the length direction of each first through hole is parallel or at an angle with the stacking direction of the electrode sheet exposed by said first through hole. According to the technical solution of the present application, battery yield can be improved and production costs can be reduced.

## Description

### TECHNICAL FIELD

This application relates to the field of battery technologies, and in particular, to a battery cell, a battery, and a power consuming device.

### BACKGROUND

Energy conservation and emission reduction are the key to the sustainable development of automobile industry, and electric vehicles have become an important part of the sustainable development of automobile industry due to their advantage of energy conservation and environmental protection. For electric vehicles, battery technologies are also an important factor related to the development of the electric vehicles.

In the manufacturing process of batteries, the yield of batteries is an issue that cannot be ignored. Therefore, how to improve the yield of batteries is an urgent technical problem to be solved in battery technologies.

### SUMMARY

This application provides a battery cell, a battery, and a power consuming device, to improve the yield of the battery and reduce production costs.

This application is implemented by the following technical solutions.

According to a first aspect, embodiments of this application provide a battery cell. The battery cell includes a housing, an electrode assembly, and an insulator. The electrode assembly is accommodated in the housing. The electrode assembly is formed by winding and/or stacking electrode plates. The electrode assembly is provided with a first end surface. The insulator is at least partially disposed between the first end surface and the housing. At least one first through hole is provided in a portion of the insulator opposite to the first end surface. The first through hole is a strip-shaped hole. A length direction of each first through hole is parallel or inclined to a stacking direction of electrode plates exposed by the first through hole.

According to the battery cell in the embodiments of this application, at least one first through hole is provided in the insulator, the first through hole is an elongated hole, and the first through hole can expose a plurality of stacked electrode plates, so that an electrolyte solution can pass through the insulator via the first through hole to wet the electrode assembly wrapped by the insulator, thereby improving the efficiency of wetting the electrode assembly by the electrolyte solution, improving a wetting interface, improving the yield of the battery cell, and reducing production costs.

According to some embodiments of this application, a plurality of first through holes are provided. The plurality of first through holes are disposed at intervals.

In the foregoing solution, the plurality of first through holes are disposed at intervals, so that a large portion of the electrode assembly can be exposed, thereby increasing a wetting area between the electrolyte solution and the electrode assembly and improving the efficiency of wetting the electrode assembly by the electrolyte solution.

According to some embodiments of this application, the plurality of first through holes are disposed at intervals in an extension direction of the electrode plates.

In the foregoing solution, the electrode assembly has a large area in the extension direction of the electrode plate, and the plurality of first through holes are distributed at different positions in the extension direction of the electrode plate, so that the electrolyte solution is in contact with and wets the electrode assembly at different positions in the extension direction of the electrode plate, thereby improving the wetting effect and wetting efficiency of the electrolyte solution.

According to some embodiments of this application, the first end surface is disposed facing a bottom wall of the housing. The battery cell further includes a separation member. The separation member is disposed in the housing and is located between the insulator and the bottom wall. The separation member is provided with a second through hole. The second through hole is a strip-shaped hole. A length direction of the second through hole is parallel to the length direction of the first through hole.

In the foregoing solution, the separation member is disposed in the housing and is located between the insulator and the bottom wall of the housing, and the separation member can improve the insulation effect between the electrode assembly and the housing. The second through hole is also a strip-shaped hole, and the length direction of the second through hole is parallel to the length direction of the first through hole, so that a large amount of electrolyte solution flows through the separation member to the first through hole to wet the electrode assembly.

According to some embodiments of this application, in a thickness direction of the bottom wall, the second through hole does not overlap the first through hole.

In the foregoing solution, the second through hole of the separation member does not overlap the first through hole in the thickness direction of the bottom wall, so that a probability that an active material layer that falls off is in contact with the housing can be reduced. In addition, the electrolyte solution may further flow from the second through hole to the first through hole through a gap between the separation member and the insulator, thereby passing through the insulator to wet the electrode assembly.

According to some embodiments of this application, a quantity of the second through holes is greater than a quantity of the first through holes.

In the foregoing solution, the quantity of the second through holes is greater than the quantity of the first through holes. A large amount of electrolyte solution can flow through the separation member to the first through holes. In addition, a small quantity of first through holes are provided in the insulator, and the insulator may have high strength.

According to some embodiments of this application, a plurality of second through holes are provided. A plurality of first through holes are provided. The plurality of first through holes and the plurality of second through holes are disposed at intervals in the extension direction of the electrode plates.

In the foregoing solution, both a plurality of second through holes and a plurality of first through holes are provided, and the plurality of first through holes and the plurality of second through holes are disposed at intervals, so that a large amount of electrolyte solution passes through the insulator to wet the electrode assembly, thereby improving the wetting effect and wetting efficiency of the electrode assembly by the electrolyte solution.

According to some embodiments of this application, the separation member is connected to the insulator to form a plurality of connection portions. At least one first through hole and at least one second through hole are disposed between two adjacent connection portions in a first direction. The first direction intersects a thickness direction of the electrode assembly.

In the foregoing solution, the separation member is connected to the insulator to form the plurality of connection portions, so that the separation member is securely connected to the insulator. At least one first through hole and at least one second through hole are disposed between two adjacent connection portions to reduce the blocking of the electrolyte solution between the separation member and the insulator by the connection portion, making it convenient for the electrolyte solution at this position to flow to the first through hole.

According to some embodiments of this application, the separation member is provided with a first surface facing the insulator. The first surface is provided with a first groove. The first groove is in communication with the first through hole and the second through hole that are adjacent.

In the foregoing solution, the first groove is in communication with the first through hole and the second through hole, so that the electrolyte solution between the separation member and the insulator can rapidly enter the first through hole, thereby improving the efficiency of wetting the electrode assembly by the electrolyte solution.

According to some embodiments of this application, in the first direction, a dimension of the battery cell is L1. A distance between the first through hole and the second through hole that are adjacent is L2. 0 < L2 ≤ 0.5L1 is satisfied. The first direction intersects the thickness direction of the electrode assembly.

In the foregoing solution, the distance between the first through hole and the second through hole that are adjacent satisfies the foregoing relationship (0 < L2 ≤ 0.5L1), so that a risk that the active material layer that falls off is in contact with the housing can be reduced, and further, the rapid flow of the electrolyte solution to the first through hole is facilitated.

According to some embodiments of this application, 1 mm ≤ L2 ≤ 20 mm.

In the foregoing solution, compared with L2 < 1 mm, when L2 ≥ 1 mm, a risk that the active material layer that falls off is in contact with the housing can be effectively reduced. Compared with L2 > 20 mm, when L2 ≤ 20 mm, the electrolyte solution can rapidly flow to the first through hole.

According to some embodiments of this application, the separation member is provided with a first positioning hole. The first positioning hole penetrates the separation member in the thickness direction of the bottom wall. The insulator is provided with a second positioning hole corresponding to the first positioning hole. The second positioning hole penetrates the insulator in the thickness direction of the bottom wall.

In the foregoing solution, the first positioning hole penetrates the separation member in the thickness direction of the bottom wall, and the second positioning hole penetrates the insulator in the thickness direction of the bottom wall, thereby facilitating the positioning of the separation member and the insulator in the thickness direction of the bottom wall.

According to some embodiments of this application, a plurality of first positioning holes are provided. A plurality of second positioning holes are provided. Each of the first positioning holes is disposed corresponding to one second positioning hole.

In the foregoing solution, each of the first positioning holes is disposed corresponding to one second positioning hole, so that the separation member and the insulator can be positioned at a plurality of positions, thereby improving the positioning effect of the separation member and the insulator. After the assembly of the separation member and the insulator is completed, at least one of the first positioning hole and the second positioning hole is sealed, thereby reducing a risk that the active material layer that falls off is in contact with the housing.

According to some embodiments of this application, the plurality of second positioning holes are disposed at two ends of the insulator in the first direction. The first direction intersects the thickness direction of the electrode assembly.

In the foregoing solution, the plurality of first positioning holes are disposed at two ends of the insulator in the first direction, thereby improving the positioning effect of the separation member and the insulator.

According to some embodiments of this application, in the thickness direction of the electrode assembly, a dimension of the electrode assembly is W1, a dimension of the first through hole is W2, and 0.1W1 ≤ W2 ≤ W1 is satisfied.

In the foregoing solution, the dimension of the electrode assembly in the thickness direction of the electrode assembly and the dimension of the first through hole in the thickness direction of the electrode assembly satisfy the foregoing relationship (0.1W1 ≤ W2 ≤ W1). The first through hole can expose a large quantity of electrode plates, thereby improving the effect of wetting the electrode assembly by the electrolyte solution. In addition, the insulator may further have high strength.

According to some embodiments of this application, 0.2W1 ≤ W2 ≤ 0.7W1.

In the foregoing solution, compared with W2 < 0.2W1, when W2 ≥ 0.2W1, the first through hole can allow a large amount of electrolyte solution to pass through. Compared with W2 > 0.7W1, when W2 ≤ 0.7W1, the insulator has higher strength.

According to some embodiments of this application, in the first direction, a dimension of the first through hole is H1. 0.5 mm ≤ H1 ≤ 10 mm is satisfied. The first direction intersects the thickness direction of the electrode assembly.

In the foregoing solution, the dimension of the first through hole in the first direction satisfies the foregoing relationship (0.5 mm ≤ H1 ≤ 10 mm). Processing and manufacturing are facilitated. In addition, the wetting of the electrode assembly by a large amount of electrolyte solution through the first through hole is facilitated, and the insulator has high strength.

According to some embodiments of this application, 1 mm ≤ H1 ≤ 5 mm,

In the foregoing solution, compared with H1 < 1 mm, when H1 ≥ 1 mm, the processing difficulty is lower, so that the wetting of the electrode assembly by the electrolyte solution is facilitated. Compared with H1 > 5 mm, when H1 ≤ 5 mm, the insulator has higher strength.

According to some embodiments of this application, the electrode assembly is a wound structure. The electrode assembly includes a straight region and a corner region. The corner region is disposed at two ends of the straight region in a length direction. The first through hole is disposed opposite to the straight region and/or the corner region.

In the foregoing solution, when the electrode assembly is a wound structure, the first through hole is disposed at a position of the insulator corresponding to the straight region, so that the first through hole exposes a large quantity of electrode plates, thereby improving the efficiency of wetting the electrode assembly by the electrolyte solution. The first through hole is disposed at a position of the insulator corresponding to the corner region, thereby improving the efficiency of wetting the electrode assembly at the corner region by the electrolyte solution.

According to some embodiments of this application, the electrode assembly is a flat structure.

In the foregoing solution, the electrode assembly is a flat structure, a plurality of electrode plates are stacked in the thickness direction of the electrode assembly, and the length direction of the first through hole is parallel to or intersects the thickness direction of the electrode assembly, so that the electrolyte solution passing through the first through hole wets a large portion of the electrode assembly, thereby improving the efficiency of wetting the electrode assembly by the electrolyte solution.

According to a second aspect, embodiments of this application further provide a battery. The battery includes the battery cell provided in any foregoing embodiment.

According to a third aspect, embodiments of this application provide a power consuming device. The power consuming device includes the battery cell or the battery provided in any foregoing embodiment. The battery cell or the battery is configured to supply electric energy.

Additional aspects and advantages of this application are partially given in the following descriptions, some of which will become apparent from the following descriptions or may be learned from practices of this application.

### BRIEF DESCRIPTION OF THE DRAWINGS

To describe the technical solutions in the embodiments of this application more clearly, the following briefly introduces the accompanying drawings required for the embodiments. It should be understood that the following accompanying drawings show merely some embodiments of this application and therefore should not be considered as a limitation to the scope. Persons of ordinary skill in the art may still derive other related drawings from these accompanying drawings without creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic structural diagram of an insulator according to some embodiments of this application;
FIG. 5 is a schematic assembly diagram of an insulator and an electrode assembly according to some embodiments of this application;
FIG. 6 is a schematic structural diagram of a C-shaped first through hole according to some embodiments of this application;
FIG. 7 is a schematic structural diagram of an S-shaped first through hole according to some embodiments of this application;
FIG. 8 is an exploded view of a battery cell according to some other embodiments of this application;
FIG. 9 is a cross-sectional view of a battery cell according to some embodiments of this application; and
FIG. 10 is a schematic assembly diagram of a separation member and a bottom insulating portion according to some embodiments of this application;
FIG. 11 is a cross-sectional view of a separation member and a bottom insulating portion after being assembled according to some embodiments of this application;
FIG. 12 is a schematic structural diagram of a bottom insulating portion and an electrode assembly according to some embodiments of this application; and
FIG. 13 is a schematic assembly diagram of an insulator and an electrode assembly according to some embodiments of this application.

In the drawings, the drawings are not drawn in an actual proportion.

Reference numerals: 100. battery; 10. box body; 11. first sub-box body; 12. second sub-box body; 20. battery cell; 21. housing; 211. shell; 2111. side wall; 2112. bottom wall; 212. end cover; 22. electrode assembly; 22a. first end surface; 221. main body portion; 222. tab; 223. electrode plate; 223a. positive electrode plate; 223b. negative electrode plate; 224. straight region; 225. corner region; 23. electrode terminal; 24. insulator; 240. accommodating cavity; 241. side insulating portion; 242. bottom insulating portion; 2421. first through hole; 2422. second positioning hole; 25. separation member; 251. second through hole; 252. connection portion; 252a. first connection portion; 252b. second connection portion; 252c. third connection portion; 253. first surface; 254. first groove; 255. first positioning hole; 26. adapter; 200. controller; 300. motor; and 1000. vehicle.

### DETAILED DESCRIPTION

To make the objectives, technical solutions, and advantages of embodiments of this application clearer, the following clearly and completely describes the technical solutions in embodiments of this application with reference to the accompanying drawings in embodiments of this application. It is clear that the described embodiments are merely some rather than all of embodiments of this application. All other embodiments obtained by persons of ordinary skill in the art based on embodiments of this application without creative efforts shall fall within the scope of protection of this application.

Unless otherwise defined, meanings of all technical and scientific terms used in this application are the same as those commonly understood by persons skilled in the art to which this application belongs; and the terms used in the descriptions of this application are merely for the purpose of describing specific embodiments, but are not intended to limit this application. The terms "comprise" and "have" and any variations thereof in the specification and the claims of this application as well as the descriptions of the accompanying drawings are intended to cover non-exclusive inclusion. The terms such as "first" and "second" in the specification and claims of this application or the foregoing accompanying drawings are only used to distinguish between different objects, but are not used to describe a specific order or a primary and secondary relationship.

Reference to "an embodiment" in this application means that a particular feature, structure or characteristic described in combination with the embodiment may be included in at least one embodiment of this application. The phrase shown in various locations in the specification may not necessarily refer to a same embodiment, and is not an independent or alternative embodiment exclusive from another embodiment. Persons skilled in the art explicitly or implicitly understand that embodiments described in this application may be combined with other embodiments.

In the description of this application, it should be noted that unless otherwise expressly specified and defined, "mounted", "connected", "connection", and "attached" should be understood in a broad sense, for example, fixedly connected, detachably connected, or integrally connected; or connected directly or through an intermediate, or two elements communicated internally. Persons of ordinary skill in the art may understand specific meanings of the foregoing terms in this application according to specific cases.

The term "and/or" in this application describes only an association relationship for describing associated objects and represents that three relationships may exist. For example, A and/or B may represent the following three cases: Only A exists, both A and B exist, and only B exists. In addition, a character "/" in this application generally indicates an "or" relationship between contextually associated objects.

The term "a plurality of" as used in this application refers to two or more (inclusive of two). Similarly, "a plurality of groups" means two or more groups (including two groups), and "a plurality of pieces" means two or more pieces (including two pieces).

In some embodiments, the battery may be a battery module. When a plurality of battery cells are provided, the plurality of battery cells are arranged and fastened to form one battery module.

In some embodiments, the battery may be a battery pack, and the battery pack includes a box body and battery cells. The battery cells or the battery module is accommodated in the box body.

In some embodiments, the box body may be used as a part of the chassis structure of a vehicle. For example, a part of the box body may serve as at least a part of the floor of a vehicle, or a part of the box body may serve as at least a part of the cross beam and longitudinal beam of a vehicle.

In some embodiments, the battery may be an energy storage apparatus. The energy storage apparatus includes an energy storage container, an energy storage cabinet, and the like.

In the embodiments of this application, the battery cell may be a secondary battery. The secondary battery is a battery cell whose active material can be activated for continuous use through charging after the battery cell is discharged.

The battery cell may be, but is not limited to, a lithium-ion battery, a sodium-ion battery, a sodium-lithium-ion battery, a lithium-metal battery, a sodium-metal battery, a lithium-sulfur battery, a magnesium-ion battery, a nickel-hydride battery, a nickel-cadmium battery, a lead storage battery, and the like.

The battery cell generally includes an electrode assembly. The electrode assembly includes a positive electrode, a negative electrode, and a separation member. During charging and discharging of the battery cell, active ions (for example, lithium ions) are intercalated and deintercalated back and forth between the positive electrode and the negative electrode. The separation member is arranged between the positive electrode and the negative electrode, and can prevent a short circuit between the positive electrode and the negative electrode and allow active ions to pass through.

In some embodiments, the positive electrode may be a positive electrode plate, and the positive electrode plate includes a positive electrode current collector and a positive electrode active material arranged on at least one surface of the positive electrode current collector.

As an example, the positive electrode current collector has two surfaces opposite to each other in a thickness direction of the positive electrode current collector, and the positive electrode active material is disposed on either or both of the two opposite surfaces of the positive electrode current collector.

As an example, the positive electrode current collector may be a metal foil or a composite current collector. For example, as the metal foil, aluminum with a silver-plated surface, stainless steel with a silver-plated surface, stainless steel, copper, aluminum, nickel, baked carbon, carbon, nickel or titanium can be used. The composite current collector can include a polymer material substrate and a metal layer. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, or polyethylene).

As an example, the positive electrode active material may include at least one of the following materials: lithium-containing phosphates, lithium transition metal oxides, and their respective modified compounds. However, this application is not limited to such materials, and may alternatively use another conventional material that may be used as a positive electrode active material for batteries.

In some embodiments, the negative electrode may be a negative electrode plate, and the negative electrode plate may include a negative electrode current collector.

As an example, the negative electrode current collector may be a metal foil or a composite current collector. For example, as the metal foil, aluminum with a silver-plated surface, stainless steel with a silver-plated surface, stainless steel, copper, aluminum, nickel, baked carbon, carbon, nickel or titanium can be used.

In some embodiments, the negative electrode current collector has two opposite surfaces in a thickness direction of the negative electrode current collector, and a negative electrode active material is disposed on either or both of the two opposite surfaces of the negative electrode current collector.

As an example, the negative electrode active material may use a negative electrode active material used for batteries well known in the art. As an example, the negative electrode active material may include at least one of the following materials: artificial graphite, natural graphite, soft carbon, hard carbon, a silicon-based material, a tin-based material and lithium titanate, etc. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, this application is not limited to such materials, and may alternatively use other conventional materials that can be used as negative electrode active materials for batteries. Only one or a combination of two or more of these negative electrode active materials may be used.

In some embodiments, the separation member is a separator. The type of the separator is not particularly limited in this application, and any well-known separator with a porous structure having good chemical stability and mechanical stability may be selected.

As an example, a main material of the separator may be selected from at least one of glass fiber, non-woven fabric, polyethylene, polypropylene, polyvinylidene fluoride, and ceramic. The separator may be a single-layer film or a multilayer composite film without special limitations. When the separator is a multilayer composite film, materials of the layers may be the same or different without special limitations. The separation member may be an independent component located between the positive electrode and the negative electrode, or may be attached to the surfaces of the positive electrode and the negative electrode.

In some embodiments, the separation member is a solid electrolyte. The solid electrolyte is disposed between the positive electrode and the negative electrode, and functions to transmit ions and separate the positive electrode and the negative electrode simultaneously.

In some embodiments, the electrode assembly is a wound structure. The positive electrode plate and the negative electrode plate are wound into wound structures.

In some embodiments, the electrode assembly is a stacked structure.

In some embodiments, the battery cell may include a housing. The housing is configured to encapsulate components such as the electrode assembly and the electrolyte. The housing may be a steel housing, an aluminum housing, a plastic housing (for example, polypropylene), a composite metal housing (for example, a copper-aluminum composite housing), an aluminum-plastic film, or the like.

In some embodiments, the housing includes an end cover and a shell. The shell is provided with an opening. The end cover closes the opening to form a closed space used for accommodating materials such as the electrode assembly and the electrolyte. The shell may be provided with one or more openings. One or more end covers may alternatively be provided.

In some embodiments, the housing is provided with at least one electrode terminal, and the electrode terminal is electrically connected to a tab of the electrode assembly. The electrode terminal may be directly connected to the tab, or may be indirectly connected to the tab via an adapter. The electrode terminal may be disposed on the end cover, or may be disposed on the shell.

In some embodiments, the housing is provided with an explosion-proof valve. The explosion-proof valve is configured to relieve internal pressure of the battery cell.

As an example, the battery cell may be a cylindrical battery cell, a prismatic battery cell, a soft pack battery cell, or a battery cell of another shape. The prismatic battery cell includes a square-case battery cell, a blade-shaped battery cell, or a multi-prismatic battery. The multi-prismatic battery is, for example, a hexagonal prismatic battery.

The advancement of battery technologies necessitates a holistic consideration of multifaceted design factors, for example, performance parameters such as energy density, discharge capacity, and charge/discharge rates. In addition, the yield of batteries further needs to be taken into consideration.

In some embodiments, the battery cell includes a housing, an electrode assembly, and an insulator. The electrode assembly and the insulator are disposed in the housing. The insulator wraps the electrode assembly. When the electrolyte solution is injected into the housing, duration of wetting the electrode assembly by the electrolyte solution is long, and some of the electrolyte solution is located between the insulator and the housing. For example, the electrolyte solution easily accumulates between the insulator and the housing, and the electrolyte solution cannot easily penetrate the insulator, making the wetting of the electrode assembly by the electrolyte solution difficult. The wetting time is long, and the wetting interface of the electrode assembly is poor. Consequently, the performance of the battery cell is low, the yield of the battery cell is affected, and the manufacturing costs of the battery cell are high.

In view of this, embodiments of this application provide a technical solution. A battery cell includes an electrode assembly and an insulator. The electrode assembly is provided with a first end surface. The insulator is at least partially disposed between the first end surface and a housing. At least one first through hole is provided in a portion of the insulator corresponding to the first end surface. The first through hole is a strip-shaped hole. The first through hole exposes a plurality of stacked electrode plates, so that an electrolyte solution can pass through the insulator to wet the electrode assembly, thereby improving the efficiency of wetting the electrode assembly by the electrolyte solution, improving the yield of the battery cell, and reducing the manufacturing costs of the battery cell.

During the manufacturing of the foregoing battery cell, because the first through hole is an elongated hole and a length direction of the first through hole is parallel or inclined to a stacking direction of the electrode plates, the first through hole can expose a plurality of stacked electrode plates. After passing through the insulator via the first through hole, the electrolyte solution can wet a large quantity of electrode plates, so that the electrolyte solution can wet a large region of the electrode assembly, thereby improving the efficiency of wetting the electrode assembly by the electrolyte solution. In addition, a wetting interface is favorable, the yield of the battery cell can be improved, and the manufacturing costs of the battery cell are low.

The battery disclosed in the embodiments of this application may be used in but is not limited to power consuming devices such as a vehicle, a ship, or an aircraft. A power supply system of the power consuming device may be formed from the battery disclosed in this application.

Embodiments of this application provide a power consuming device using a battery as a power supply. The power consuming device may be, but is not limited to, a mobile phone, a tablet computer, a laptop computer, an electric toy, a power tool, an electric bicycle, an electric motorcycle, an electric vehicle, a ship, spacecraft, or the like. The electric toy may be a stationary or mobile electric toy, for example, a game console, an electric vehicle toy, an electric ship toy, or an electric aircraft toy. The spacecraft may include an airplane, a rocket, a space shuttle, a spaceship, and the like.

For ease of description in the following embodiments, an example in which a power consuming device in an embodiment of this application is a vehicle 1000 is used for description.

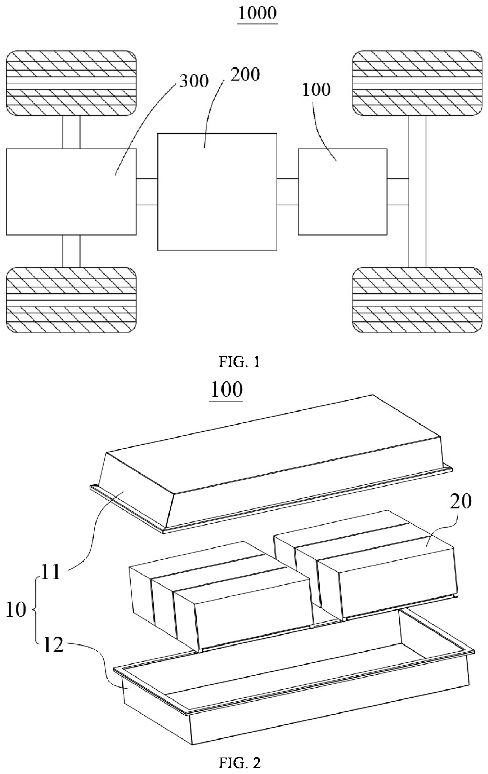

FIG. 1 is a schematic structural diagram of a vehicle according to some embodiments of this application. The vehicle 1000 may be a fuel powered vehicle, a gas powered vehicle, or a new energy vehicle. The new energy vehicle may be a pure electric vehicle, a hybrid electric vehicle, or an extended range vehicle, etc. The inner part of the vehicle 1000 is provided with a battery 100. The battery 100 may be disposed at the bottom, head, or tail of the vehicle 1000. The battery 100 may be configured to supply power to the vehicle 1000. For example, the battery 100 may be used as an operating power supply of the vehicle 1000 and used for a circuit system of the vehicle 1000, for example, may be used for operating electricity requirements during starting, navigation, and operation of the vehicle 1000.

The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of this application, the battery 100 can not only serve as a power supply for operating the vehicle 1000, but can also serve as a power supply for driving the vehicle 1000, in place of or partially in place of fuel or natural gas, to provide driving power for the vehicle 1000.

FIG. 2 is an exploded view of a battery according to some embodiments of this application. The battery 100 includes a box body 10 and battery cells 20. The battery cells 20 are accommodated in the box body 10. The box body 10 is configured to provide an accommodating space for the battery cells 20. The box body 10 may use a variety of structures. In some embodiments, the box body 10 may include a first sub-box body 11 and a second sub-box body 12, the first sub-box body 11 and the second sub-box body 12 cover each other, and the first sub-box body 11 and the second sub-box body 12 jointly define the accommodating space for accommodating the battery cells 20. The second sub-box body 12 may be a hollow structure being open on one side, the first sub-box body 11 may be a plate-shaped structure, and the first sub-box body 11 covers an open side of the second sub-box body 12, so that the first sub-box body 11 and the second sub-box body 12 jointly define the accommodating space. Alternatively, each of the first sub-box body 11 and the second sub-box body 12 may be a hollow structure being open on one side, and an open side of the first sub-box body 11 covers an open side of the second sub-box body 12.

In the battery 100, a plurality of battery cells 20 may be provided, and the plurality of battery cells 20 can be connected in series, parallel, or series-parallel. Series-parallel connection means that both series connection and parallel connection exist among the plurality of battery cells 20. The plurality of battery cells 20 may be directly connected in series, parallel, or series-parallel together, and then the whole formed by the plurality of battery cells 20 may be accommodated in the box body 10. Certainly, the battery 100 may alternatively be in the form of a battery module formed by the plurality of battery cells 20 that are first connected in series, parallel, or series-parallel. A plurality of battery modules are then connected in series, parallel, or series-parallel to form a whole and accommodated in the box body 10. The battery 100 may further include other structures, for example, the battery 100 may further include a bus component for achieving the electrical connection between the plurality of battery cells 20.

The battery cell 20 may be a secondary battery or a primary battery. The battery cell 20 may alternatively be a lithium-sulfur battery, a sodium-ion battery, or a magnesium-ion battery, but is not limited thereto.

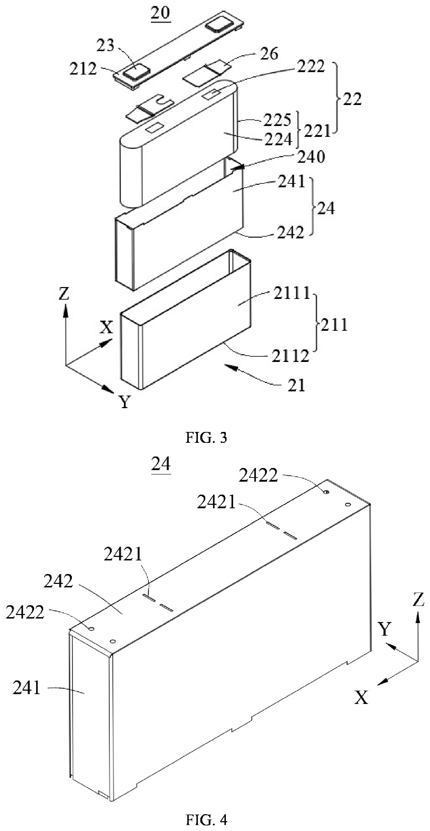

FIG. 3 is an exploded view of a battery cell according to some embodiments of this application. As shown in FIG. 3, the battery cell 20 includes a housing 21, an electrode assembly 22, and an electrode terminal 23. The housing 21 includes a shell 211 and an end cover 212. The shell 211 is provided with an opening. The end cover 212 closes the opening to isolate an internal environment of the battery cell 20 from an external environment.

The shell 211 is an assembly configured to form an internal environment of the battery cells 20 together with the end cover 212. The formed internal environment may be configured to accommodate the electrode assembly 22, an electrolyte solution, and other elements. The shell 211 and the end cover 212 may be independent components. The shell 211 may be of various shapes and various dimensions. Specifically, the shape of the shell 211 may be determined based on a specific shape and dimension of the electrode assembly 22. The shell 211 may be made of various materials, such as copper, iron, aluminum, stainless steel, aluminum alloy, and plastics.

The end cover 212 refers to an element that covers an opening of the shell 211 to isolate an internal environment of the battery cell 20 from an external environment. A shape of the end cover 212 is not limited and may be adapted to a shape of the shell 211 to fit the shell 211. Optionally, the end cover 212 may be made of a material with specified hardness and strength (for example, aluminum alloy), so that the end cover 212 is less likely to deform under extrusion and collision, thereby enabling the battery cell 20 to have a higher structural strength and enhanced reliability. Functional components such as electrode terminals may be arranged on the end cover 212. The electrode terminals may be configured to electrically connect to the electrode assembly 22 to output or input electric energy of the battery cell 20. The end cover 212 may also be made of various materials, such as copper, iron, aluminum, stainless steel, aluminum alloy, and plastic, which are not particularly limited in the embodiments of this application. In some embodiments, an insulating structure may further be arranged on an inner side of the end cover 212. The insulating structure can be configured to isolate electrical connection components in the shell 211 from the end cover 212, reducing a risk of short circuit. For example, the insulating structure may be made of plastic, rubber, or the like.

The electrode assembly 22 is an element in the battery cell 20 that undergoes electrochemical reactions. The shell 211 may include one or more electrode assemblies 22. The electrode assembly 22 is mainly formed by winding and/or stacking a positive electrode plate and a negative electrode plate, and a separator is generally provided between the positive electrode plate and the negative electrode plate. The separator is configured to isolate the positive electrode plate and the negative electrode plate to prevent an internal short circuit between the positive electrode plate and the negative electrode plate. Portions of the positive electrode plate and the negative electrode plate with active substances constitute a main body portion 221 of the electrode assembly, while parts of the positive electrode plate and the negative electrode plate without active substances separately constitute a tab 222. The positive electrode tab and the negative electrode tab may be located at one end of the main body portion 221 together or at two ends of the main body portion 221 separately. During charging and discharging of the battery 100, a positive electrode active substance and a negative electrode active substance react with an electrolyte solution, and the tabs 222 are connected to the electrode terminals 23 by the adapter 26 to form a current loop.

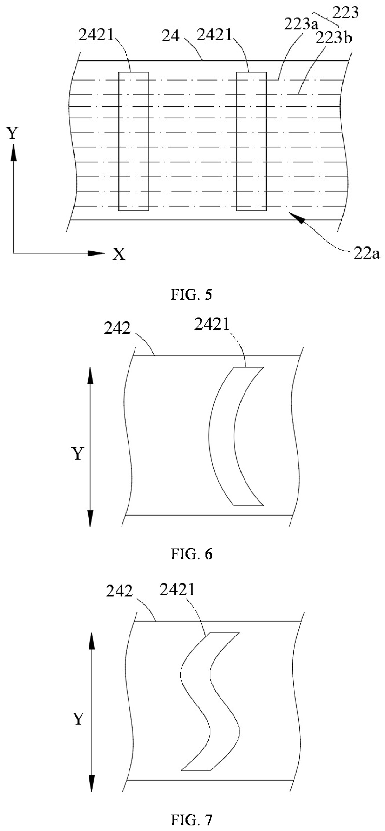

Refer to FIG. 3, and further refer to FIG. 4 and FIG. 5. FIG. 4 is a schematic structural diagram of an insulator according to some embodiments of this application. FIG. 5 is a schematic assembly diagram of an insulator and an electrode assembly according to some embodiments of this application. In FIG. 5, a plurality of electrode plates are exposed by a first through hole. According to some embodiments of this application, embodiments of this application provide a battery cell 20. The battery cell 20 includes a housing 21, an electrode assembly 22, and an insulator 24. The electrode assembly 22 is accommodated in the housing 21. The electrode assembly 22 is formed by winding and/or stacking electrode plates. The electrode assembly is provided with a first end surface. The insulator 24 is at least partially disposed between the first end surface 22a and the housing 21. At least one first through hole 2421 is provided in a portion of the insulator 24 opposite to the first end surface 22a. The first through hole 2421 is a strip-shaped hole. A length direction Y of each first through hole 2421 is parallel or inclined to a stacking direction of electrode plates 223 exposed by the first through hole 2421.

In the figure, the direction indicated by the letter Y may be parallel to the length direction of the first through hole 2421.

The electrode assembly 22 may be a stacked structure, or may be a wound structure, or may be partially a stacked structure and partially a wound structure, for example, a stacked structure inside and a wound structure outside, with the wound structure wound outside the stacked structure.

An outer periphery of the electrode assembly 22 is disposed around a bottom of the electrode assembly 22. The electrode assembly 22 includes a main body portion 221 and a tab 222. The tab 222 extends from an end surface of an end of the main body portion 221. The outer periphery of the electrode assembly 22 refers to an outer peripheral surface of the main body portion 221 that is disposed around an edge of the end surface. In some embodiments, the tab 222 may be located at a top of the electrode assembly 22.

The electrode assembly 22 is mainly formed by winding or stacking a positive electrode plate 223a and a negative electrode plate 223b. A plurality of electrode plates 223 are stacked.

The insulator 24 is a component having an insulation function. The insulator 24 is used for insulating the electrode assembly 22 from the housing 21.

The insulator 24 may be an insulating film having a small thickness, to reduce space occupation. For example, the insulator 24 may be a Mylar film.

The insulator 24 includes a side insulating portion 241 and a bottom insulating portion 242. The side insulating portion 241 wraps the outer periphery of the electrode assembly 22. The bottom insulating portion 242 is connected to the side insulating portion 241 and wraps the bottom of the electrode assembly 22.

The first end surface 22a is an end surface of an end of the main body portion 221 of the electrode assembly 22. For example, the first end surface 22a may be an end surface of an end of the electrode assembly 22 in a length direction, or the first end surface 22a may be an end surface of an end of the electrode assembly 22 in a width direction. In some embodiments, the first end surface 22a may be opposite to an end surface of an end of the main body portion 221 from which the tab 222 extends, and the first end surface 22a may be non-coplanar with the end surface of the end of the main body portion 221 from which the tab 222 extends.

The first through hole 2421 is provided in a portion of the insulator 24 opposite to the first end surface 22a. For example, when the side insulating portion 241 is disposed opposite to the first end surface 22a, the first through hole 2421 may be provided in the side insulating portion 241. Alternatively, when the bottom insulating portion 242 is disposed opposite to the first end surface 22a, as shown in FIG. 4, the first through hole 2421 may be provided in the bottom insulating portion 242.

The side insulating portion 241 may be cylindrical. One end of the side insulating portion 241 may be an opening, and the other end of the side insulating portion 241 is connected to the bottom insulating portion 242 to form an accommodating cavity 240. The electrode assembly 22 is accommodated in the accommodating cavity 240. When an electrolyte solution is injected into the housing 21, the electrolyte solution can enter the accommodating cavity 240 through the opening of the side insulating portion 241 away from the bottom insulating portion 242, thereby facilitating wetting by the electrolyte solution.

The bottom insulating portion 242 is located at the bottom of the electrode assembly 22. When the electrolyte solution is injected into the housing 21, the electrolyte solution usually performs wetting from the top of the electrode assembly 22 toward the bottom of the electrode assembly 22, and the electrolyte solution does not easily penetrate the insulator 24. In addition, duration of wetting the electrode assembly 22 by the electrolyte solution is long, and some of the electrolyte solution overflows between the insulator 24 and the housing 21 and accumulates between the bottom insulating portion 242 and the housing 21. The first through hole 2421 is provided in the side insulating portion 241 and/or the bottom insulating portion 242, and the electrolyte solution can enter the accommodating cavity 240 from the first through hole 2421 to wet the electrode assembly 22.

The first through hole 2421 may penetrate the insulator 24 along a thickness direction of the insulator 24, so that the inside of the accommodating cavity 240 is in communication with the outside.

Still refer to FIG. 5, and further refer to FIG. 6 and FIG. 7. FIG. 6 is a schematic structural diagram of a C-shaped first through hole according to some embodiments of this application. FIG. 7 is a schematic structural diagram of an S-shaped first through hole according to some embodiments of this application. The first through hole 2421 is a strip-shaped hole. An extension track of the first through hole 2421 may be a straight line, or may be a curve, for example, a C-shaped track, an S-shaped track, or an irregular track. The extension track means that the first through hole 2421 forms a strip-shaped structure from a start point to an end point according to the extension track. Optionally, the extension track of the first through hole 2421 is a straight line, and the first through hole 2421 is a linear strip-shaped hole.

The first through hole 2421 can expose a plurality of stacked electrode plates 223. The length direction Y of the first through hole 2421 may be parallel to the stacking direction of the electrode plates 223, or may be inclined to the stacking direction of the electrode plates 223, so that in the stacking direction of the electrode plates 223, the first through hole 2421 exposes the plurality of electrode plates 223.

During the manufacturing of the foregoing battery cell 20, because the first through hole 2421 is an elongated hole and a length direction Y of the first through hole 2421 is parallel or inclined to a stacking direction of the electrode plates 223, the first through hole 2421 can expose a plurality of stacked electrode plates 223. After passing through the insulator 24 via the first through hole 2421, the electrolyte solution can wet a large quantity of electrode plates 223, so that the electrolyte solution can wet a large region of the electrode assembly 22, thereby shortening the duration of wetting the electrode assembly 22 by the electrolyte solution, improving the efficiency of wetting the electrode assembly 22 by the electrolyte solution. In addition, a wetting interface is favorable, the yield of the battery cell 20 can be improved, and the manufacturing costs of the battery cell 20 are low.

Referring to FIG. 4 and FIG. 5, according to some embodiments of this application, a plurality of first through holes 2421 are provided. The plurality of first through holes 2421 are disposed at intervals.

The plurality of first through holes 2421 are disposed at intervals, so that the plurality of first through holes 2421 occupy a large area, and the electrolyte solution can enter the accommodating cavity 240 at a plurality of positions of the insulator 24, thereby improving the efficiency of the electrolyte solution passing through the bottom insulating portion 242.

In the foregoing solution, the plurality of first through holes 2421 are disposed at intervals, so that a large portion of the electrode assembly 22 can be exposed, thereby increasing a wetting area between the electrolyte solution and the electrode assembly 22 and improving the efficiency of wetting the electrode assembly 22 by the electrolyte solution.

Referring to FIG. 5, according to some embodiments of this application, the plurality of first through holes 2421 are disposed at intervals in an extension direction X of the electrode plates.

In the figure, the direction indicated by letter X may be the extension direction of the electrode plates. In an embodiment in which the first through hole 2421 is provided in the bottom insulating portion 242, the extension direction X of the electrode plates may be parallel to a length direction of the bottom insulating portion 242. In an embodiment in which the first through hole 2421 is provided in the side insulating portion 241, the extension direction X of the electrode plates may be parallel to a length direction of the side insulating portion 241.

In some embodiments, the extension direction X of the electrode plates intersects a stacking direction of the electrode plates. When the electrode assembly 22 is a wound structure, the extension direction of the electrode plates may be a winding direction of the electrode plates. When the electrode assembly 22 is a stacked structure, the extension direction of the electrode plate may be a length direction of the electrode plates or may be a width direction of the electrode plates.

In some embodiments, a dimension of the bottom insulating portion 242 in the length direction of the bottom insulating portion 242 is greater than dimensions in other directions, so that the bottom insulating portion 242 has a large region corresponding to the electrode assembly 22 in the length direction of the bottom insulating portion 242.

In some embodiments, the bottom insulating portion 242 may be rectangular, thereby facilitating connection to the side insulating portion 241 to form the accommodating cavity 240 having a large capacity.

In the foregoing solution, the electrode assembly 22 occupies a large area in the extension direction X of the electrode plate, and the plurality of first through holes 2421 are distributed at different positions in the extension direction X of the electrode plate, so that the electrolyte solution is in contact with and wets the electrode assembly 22 at different positions in the extension direction X of the electrode plate, thereby improving the wetting effect and wetting efficiency of the electrolyte solution.

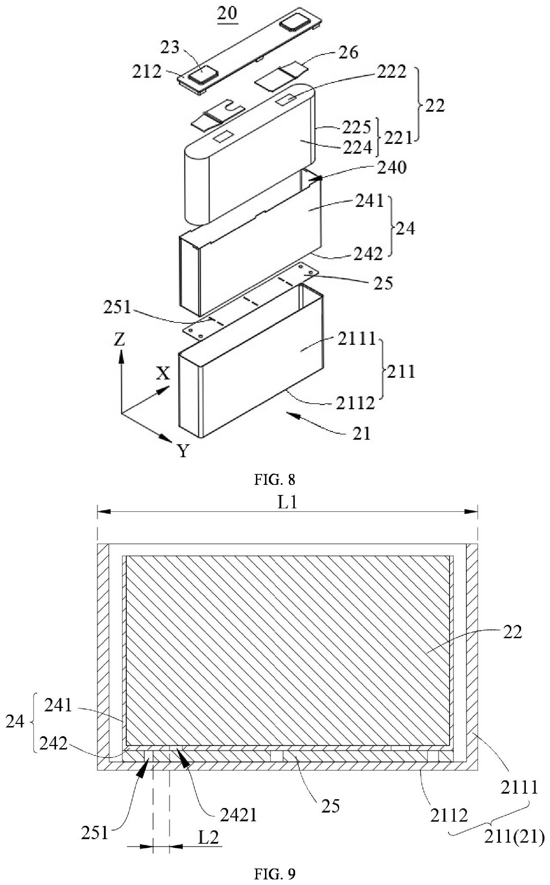

FIG. 8 is an exploded view of a battery cell according to some other embodiments of this application. FIG. 9 is a cross-sectional view of a battery cell according to some embodiments of this application. For ease of description, FIG. 9 only shows a partial structure of the battery cell. According to some embodiments of this application, the first end surface 22a is disposed facing a bottom wall 2112 of the housing 21. The battery cell 20 further includes a separation member 25. The separation member 25 is disposed in the housing 21 and is located between the 24 insulator and the bottom wall 2112. The separation member 25 is provided with a second through hole 251. The second through hole 251 is a strip-shaped hole. A length direction of the second through hole 251 is parallel to the length direction Y of the first through hole 2421.

The housing 21 includes a shell 211 and an end cover 212. The shell 211 is provided with an opening. The end cover 212 closes the opening of the shell 211. The shell 211 may include a side wall 2111 and a bottom wall 2112. One end of the side wall 2111 is connected to the bottom wall 2112, and an opening is formed at the other end of the side wall 2111.

The bottom insulating portion 242 of the insulator 24 may be disposed adjacent to the bottom wall 2112. A liquid injection hole may be provided in the end cover 212 or may be provided in the side wall 2111 to inject the electrolyte solution into the housing 21. After the electrolyte solution is injected, the electrolyte solution can accumulate between the bottom insulating portion 242 and the bottom wall 2112.

The separation member 25 is an electrical insulation component. The separation member 25 is located between the bottom of the electrode assembly 22 and the bottom wall 2112. In some embodiments, the separation member 25 may also be referred to as a bottom support and is configured to carry the electrode assembly 22.

The second through hole 251 may penetrate the separation member 25 along a thickness direction Z of the bottom wall 2112, so that the electrolyte solution passes through the separation member 25 in a thickness direction Z of the bottom insulating portion 242 via the second through hole 251, thereby reducing blocking of the electrolyte solution by the separation member 25. The thickness direction Z of the bottom wall 2112 may be parallel to a thickness direction of the separation member 25, and the thickness direction Z of the bottom wall 2112 may be parallel to a thickness direction of the bottom insulating portion 242.

The second through hole 251 is a strip-shaped hole. An extension track of the second through hole 251 may be a straight line, or may be a curve, for example, a C-shaped track, an S-shaped track, or an irregular track. The extension track means that the second through hole 251 forms a strip-shaped structure from a start point to an end point according to the extension track. Optionally, the extension track of the second through hole 251 is a straight line, and the second through hole 251 is a linear strip-shaped hole.

The extension track of the second through hole 251 may be the same as or different from the extension track of the first through hole 2421. Optionally, the extension track of the second through hole 251 is the same as the extension track of the first through hole 2421.

The length direction of the second through hole 251 is parallel to the length direction Y of the first through hole 2421. For example, the second through hole 251 and the first through hole 2421 are spaced apart in the extension direction X of the electrode plate, and the second through hole 251 at least partially overlaps the first through hole 2421 in the extension direction X of the electrode plate.

In the foregoing solution, the separation member 25 is disposed in the housing 21 and is located between the bottom insulating portion 242 and the bottom wall 2112 of the housing 21, and the separation member 25 can improve the insulation effect between the electrode assembly 22 and the housing 21. The second through hole 251 is also a strip-shaped hole, and the length direction of the second through hole 251 is parallel to the length direction Y of the first through hole 2421, so that a large amount of electrolyte solution 25 flows through the separation member 2421 to the first through hole to wet the electrode assembly 22.

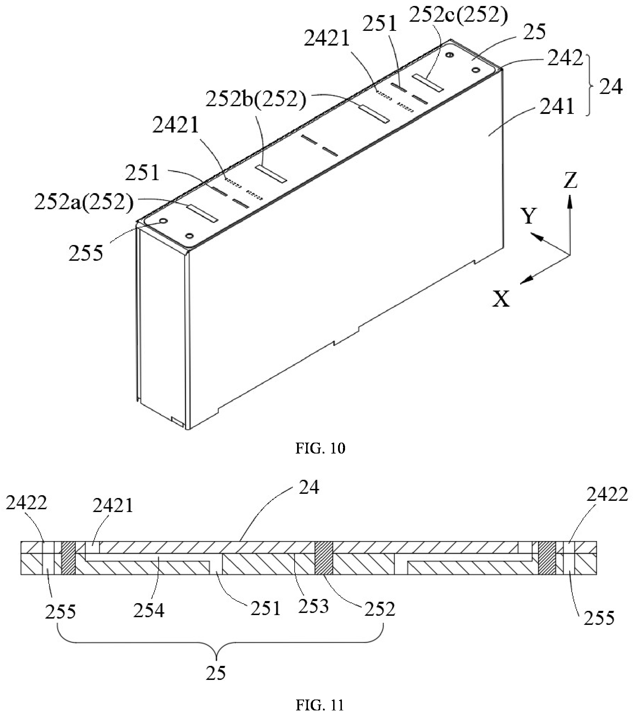

FIG. 10 is a schematic assembly diagram of a separation member and a bottom insulating portion according to some embodiments of this application. According to some embodiments of this application, in the thickness direction Z of the bottom wall 2112, the second through hole 251 does not overlap the first through hole 2421.

As observed in the thickness direction Z of the bottom wall 2112, the second through hole 251 is staggered from the first through hole 2421, so that the second through hole 251 does not overlap the first through hole 2421.

The second through hole 251 of the separation member 25 does not overlap the first through hole 2421 in the thickness direction Z of the bottom wall 2112, so that a probability that an active material layer 21 that falls off is in contact with the housing can be reduced. In addition, the electrolyte solution may further flow from the second through hole 251 to the first through hole 2421 through a gap between the separation member 25 and the insulator 24, thereby passing through the insulator 24 to wet the electrode assembly 22.

According to some embodiments of this application, a quantity of the second through holes 251 is greater than a quantity of the first through holes 2421.

Strength of the separation member 25 may be greater than strength of the insulator 24, and a quantity of the second through holes 251 is greater than a quantity of the first through holes 2421, so that the separation member 25 still has high strength.

The quantity of the second through holes 251 is greater than the quantity of the first through holes 2421. A large amount of electrolyte solution can flow through the separation member 25 to the first through holes 2421. In addition, a small quantity of first through holes 2421 are provided in the insulator 24, the impact on the strength of the insulator 24 is small, and the insulator 24 may have high strength.

According to some embodiments of this application, a plurality of second through holes 251 are provided. A plurality of first through holes 2421 are provided. The plurality of first through holes 2421 and the plurality of second through holes 251 are disposed at intervals in the extension direction X of the electrode plates.

The extension direction X of the electrode plates may be parallel to a length direction of the bottom insulating portion 242. A thickness direction of the electrode assembly 22 may be parallel to a width direction (for example, the direction Y) of the bottom insulating portion 242.

As observed in the extension direction X of the electrode plate, the first through hole 2421 and the second through hole 251 that are adjacent at least partially overlap.

Optionally, as observed in the extension direction X of the electrode plate, the first through hole 2421 completely overlaps the second through hole 251.

In the foregoing solution, both a plurality of second through holes 251 and a plurality of first through holes 2421 are provided, and the plurality of first through holes 2421 and the plurality of second through holes 251 are disposed at intervals, so that a large amount of electrolyte solution passes through the insulator 24 to wet the electrode assembly 22, thereby improving the wetting effect and wetting efficiency of the electrode assembly 22 by the electrolyte solution.

Referring to FIG. 10, according to some embodiments of this application, the separation member 25 is connected to the insulator 24 to form a plurality of connection portions 252. At least one first through hole 2421 and at least one second through hole 251 are disposed between two adjacent connection portions 252 in the first direction (for example, the direction X). The first direction intersects the thickness direction of the electrode assembly 22.

The separation member 25 and the insulator 24 may be connected in a plurality of manners. For example, the separation member 25 and the insulator 24 may be thermally fused together, or the separation member 25 and the insulator 24 may alternatively be bonded. Optionally, the separation member 25 and the insulator 24 are thermally fused together, so that the separation member 25 is securely connected to the insulator 24.

The separation member 25 may be connected to the bottom insulating portion 242 of the insulator 24.

The plurality of connection portions 252 may be disposed at intervals in the first direction, so that the separation member 25 is securely connected to the insulator 24. The first direction may be parallel to a length direction of the separation member 25, and the length direction of the separation member 25 may be parallel to a length direction of the battery cell 20.

In some embodiments, a length direction of the connection portion 252 may be parallel to the length direction Y of the first through hole 2421.

In the foregoing solution, the separation member 25 is connected to the insulator 24 to form the plurality of connection portions 252, so that the separation member 25 is securely connected to the insulator 24. At least one first through hole 2421 and at least one second through hole 251 are disposed between two adjacent connection portions 252 to reduce the blocking of the electrolyte solution between the separation member 25 and the insulator 24 by the connection portion 252, making it convenient for the electrolyte solution at this position to flow to the first through hole 2421.

In some embodiments, the plurality of connection portions 252 may include a first connection portion 252a, a second connection portion 252b, and a third connection portion 252c that are disposed at intervals in the first direction. The first connection portion 252a and the third connection portion 252c are located at two ends of the separation member 25 in the first direction. The second connection portion 252b is located between the first connection portion 252a and the third connection portion 252c. The second connection portion 252b is located between two adjacent second through holes 251. In this manner, the separation member 25 is securely connected to the insulator 24.

FIG. 11 is a cross-sectional view of a separation member and a bottom insulating portion after being assembled according to some embodiments of this application. According to some embodiments of this application, the separation member 25 is provided with a first surface 253 facing the insulator 24. The first surface 253 is provided with a first groove 254. The first groove 254 is in communication with the first through hole 2421 and the second through hole 251 that are adjacent.

The first surface 253 is a surface of the separation member 25 facing the bottom insulating portion 242. The first groove 254 is provided in the first surface 253, and extends from the first surface 253 away from the bottom insulating portion 242. One end of the first groove 254 is in communication with the second through hole 251.

At the first through hole 2421 and the second through hole 251 that are adjacent, as observed in the thickness direction Z of the bottom wall 2112, the first through hole 2421 partially overlaps the first groove 254, so that the first groove 254 is in communication with the first through hole 2421 and the second through hole 251 that are adjacent.

In some embodiments, the first groove 254 may be in communication with all the second through holes 251. Alternatively, a quantity of the first grooves 254 is the same as a quantity of the second through holes 251, and one first groove 254 is communication with one second through hole 251.

In the foregoing solution, the first groove 254 is in communication with the first through hole 2421 and the second through hole 251, so that the electrolyte solution between the separation member 25 and the insulator 24 can rapidly enter the first through hole 2421, thereby improving the efficiency of wetting the electrode assembly 22 by the electrolyte solution.

Referring to FIG. 9, according to some embodiments of this application, in the first direction, a dimension of the battery cell 20 is L1. A distance between the first through hole 2421 and the second through hole 251 that are adjacent is L2. 0 < L2 ≤ 0.5L1 is satisfied. The first direction intersects the thickness direction of the electrode assembly 22.

L1 may be a dimension of the shell 211 in the first direction (for example, the X direction).

Optionally, L2 be 0.1L1, 0.2L1, 0.3L1, 0.4L1, 0.5L1, or the like.

In the foregoing solution, the distance between the first through hole 2421 and the second through hole 251 that are adjacent satisfies the foregoing relationship (0 < L2 ≤ 0.5L1), so that a risk that the active material layer that falls off is in contact with the housing 21 can be reduced, and further, the rapid flow of the electrolyte solution to the first through hole 2421 is facilitated.

According to some embodiments of this application, 1 mm ≤ L2 ≤ 20 mm.

Optionally, L2 may be 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, or the like.

In the foregoing solution, compared with L2 < 1 mm, when L2 ≥ 1 mm, a risk that the active material layer that falls off is in contact with the housing 21 can be effectively reduced. Compared with L2 > 20 mm, when L2 ≤ 20 mm, the electrolyte solution can rapidly flow to the first through hole 2421.

According to some embodiments of this application, the separation member 25 is provided with a first positioning hole 255. The first positioning hole 255 penetrates the separation member 25 in the thickness direction Z of the bottom wall 2112. The insulator is provided with a second positioning hole 2422 corresponding to the first positioning hole 255. The second positioning hole 2422 penetrates the insulator 24 in the thickness direction Z of the bottom wall 2112.

The second positioning hole 2422 and the first positioning hole 255 are both through holes, so that a positioning member is passed through the second positioning hole 2422 and the corresponding first positioning hole 255.

The second positioning hole 2422 may be a through hole in the bottom insulating portion 242, thereby facilitating the positioning of the insulator 24 and the separation member 25.

In the foregoing solution, the second positioning hole 2422 penetrates the insulator 24 in the thickness direction Z of the bottom wall 2112, and the first positioning hole 255 penetrates the separation member 25 in the thickness direction Z of the bottom wall 2112, thereby facilitating the positioning of the separation member 25 and the bottom insulating portion 242 in the thickness direction Z of the bottom wall 2112.

According to some embodiments of this application, a plurality of first positioning holes 255 are provided. A plurality of second positioning holes 2422 are provided. Each of the first positioning holes 255 is disposed corresponding to one second positioning hole 2422.

In the foregoing solution, each of the first positioning holes 255 is disposed corresponding to one second positioning hole 2422, so that the separation member 25 and the insulator 24 can be positioned at a plurality of positions, thereby improving the positioning effect of the separation member 25 and the insulator 24. After the assembly of the separation member 25 and the insulator 24 is completed, at least one of the first positioning hole 255 and the second positioning hole 2422 is sealed, thereby reducing a risk that the active material layer that falls off is in contact with the housing 21.

According to some embodiments of this application, the plurality of second positioning holes 2422 are disposed at two ends of the insulator 24 in the first direction. The first direction intersects the thickness direction of the electrode assembly 22.

The plurality of second positioning holes 2422 are disposed at two ends of the bottom insulating portion 242 in the first direction.

In the foregoing solution, the plurality of second positioning holes 2422 are disposed at two ends of the bottom insulating portion 242 in the first direction, thereby improving the positioning effect of the separation member 25 and the insulator 24.

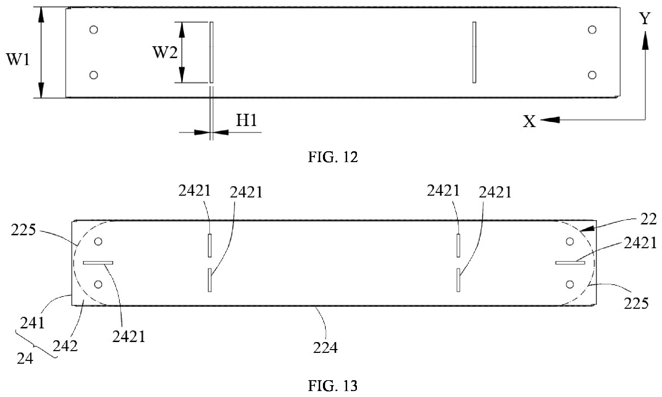

FIG. 12 is a schematic structural diagram of a bottom insulating portion and an electrode assembly according to some embodiments of this application. According to some embodiments of this application, in the thickness direction of the electrode assembly 22, a dimension of the electrode assembly 22 is W1, a dimension of the first through hole 2421 is W2, and 0.1W1 ≤ W2 ≤ W1 is satisfied.

As shown in FIG. 12, the thickness direction of the electrode assembly 22 may be parallel to the direction Y.

Optionally, W2 may be 0.1W1, 0.2W1, 0.3W1, 0.4W1, 0.5W1, 0.6W1, 0.7W1, 0.8W1, 0.9W1, W1, or the like.

In the foregoing solution, the dimension of the electrode assembly 22 in the thickness direction of the electrode assembly 22 and the dimension of the first through hole 2421 in the thickness direction of the electrode assembly 22 satisfy the foregoing relationship (0.1W1 ≤ W2 ≤ W1). The first through hole 2421 can expose a large quantity of electrode plates 223, thereby improving the effect of wetting the electrode assembly 22 by the electrolyte solution. In addition, the insulator 24 may further have high strength.

According to some embodiments of this application, 0.2W1 ≤ W2 ≤ 0.7Wl.

Optionally, W2 may be 0.2W1, 0.25W1, 0.3W1, 0.35W1, 0.4W1, 0.45W1, 0.5W1, 0.55W1, 0.6W1, 0.65W1, or 0.7W1.

In the foregoing solution, compared with W2 < 0.2W1, when W2 ≥ 0.2W1, the first through hole 2421 can allow a large amount of electrolyte solution to pass through. Compared with W2 > 0.7W1, when W2 ≤ 0.7W1, the insulator 24 has higher strength.

Referring to FIG. 12, according to some embodiments of this application, in the first direction, a dimension of the first through hole 2421 is H1. 0.5 mm ≤ H1 ≤ 10 mm is satisfied. The first direction intersects the thickness direction of the electrode assembly 22.

As shown in FIG. 12, the first direction may be parallel to the direction X.

Optionally, H1 may be 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, or the like.

In the foregoing solution, the dimension of the first through hole 2421 in the first direction satisfies the foregoing relationship (0.5 mm ≤ H1 ≤ 10 mm). Processing and manufacturing are facilitated. In addition, the wetting of the electrode assembly 22 by a large amount of electrolyte solution through the first through hole 2421 is facilitated, and the insulator 24 has high strength.

According to some embodiments of this application, 1 mm ≤ H1 ≤ 5 mm.

Optionally, H1 may be 1 mm, 1.25 mm, 1.5 mm, 1.75 mm, 2 mm, 2.25 mm, 2.5 mm, 2.75 mm, 3 mm, 3.25 mm, 3.5 mm, 3.75 mm, 4 mm, 4.25 mm, 4.5 mm, 4.75 mm, 5 mm, or the like.

In the foregoing solution, compared with H1 < 1 mm, when H1 ≥ 1 mm, the processing difficulty is low, so that the wetting of the electrode assembly 22 by the electrolyte solution is facilitated. Compared with H1 > 5 mm, when H1 ≤ 5 mm, the insulator 24 has higher strength.

Refer to FIG. 3 and FIG. 8, and further refer to FIG. 13. FIG. 13 is a schematic assembly diagram of an insulator and an electrode assembly according to some embodiments of this application. According to some embodiments of this application, the electrode assembly 22 is a wound structure. The electrode assembly 22 includes a straight region 224 and a corner region 225. The corner region 225 is disposed at two ends of the straight region 224 in a length direction. The first through hole 2421 is disposed opposite to the straight region 224 and/or the corner region 225.

The electrode assembly 22 is flat, so that the electrode assembly 22 includes a straight region 224 and a corner region 225 located at two ends of the straight region 224. The straight region 224 refers to a region having a parallel structure in the electrode assembly 22, that is, surfaces of the negative electrode plate, the positive electrode plate, and the separator in the straight region 224 are all flat. The corner region 225 refers to a region having a bent structure in the electrode assembly 22. The negative electrode plate, the positive electrode plate, and the separator in the corner region 225 are bent, that is, a surface of each of the negative electrode plate, the positive electrode plate, and the separator in the corner region 225 of the electrode assembly 22 is a curved surface.

In some embodiments, some of the plurality of first through holes 2421 is right opposite to the straight region 224. In the plurality of first through holes 2421 located in the region, the length direction Y of each first through hole 2421 is parallel or inclined to the thickness direction of the electrode assembly 22, so that the first through hole 2421 can expose the plurality of electrode plates 223. Optionally, in the plurality of first through holes 2421 located in the region, the length direction Y of each first through hole 2421 is parallel to the thickness direction of the electrode assembly 22, and the extension track of the first through hole 2421 is a straight line, thereby facilitating processing and manufacturing.

In some embodiments, the thickness direction of the electrode assembly 22 is parallel to a width direction of the bottom insulating portion 242. In the plurality of first through holes 2421 right opposite to the straight region 224, the length direction Y of each first through hole 2421 may be parallel to the width direction of the bottom insulating portion 242.

In some embodiments, in the thickness direction Z of the bottom insulating portion 242, some other of the plurality of first through holes 2421 are right opposite to the corner region 225. In the plurality of first through holes 2421 located in the region, the length direction Y of each first through hole 2421 intersects or is inclined to a stacking direction of the plurality of electrode plates 223 to expose the plurality of electrode plates 223. Optionally, in the plurality of first through holes 2421 located in the region, the length direction Y of each first through hole 2421 may be parallel to a radial direction of the corner region 225, and the extension track of the first through hole 2421 may be a straight line.

In the foregoing solution, when the electrode assembly 22 is a wound structure, the first through hole 2421 is disposed at a position of the bottom insulating portion 242 corresponding to the straight region 224, so that the first through hole 2421 exposes a large quantity of electrode plates 223, thereby improving the efficiency of wetting the electrode assembly 22 by the electrolyte solution. The first through hole 2421 is disposed at a position of the insulator 24 corresponding to the corner region 225, thereby improving the efficiency of wetting the electrode assembly 22 at the corner region by the electrolyte solution 225.

Referring to FIG. 3 and FIG. 8, according to some embodiments of this application, the electrode assembly 22 is a flat structure.

The electrode assembly 22 may be a flat structure. The electrode assembly 22 may be a stacked structure or may be a wound structure. In some embodiments, the length direction Y of each first through hole 2421 may be parallel or inclined to the thickness direction of the electrode assembly 22.

In the foregoing solution, the electrode assembly 22 is a flat structure, a plurality of electrode plates 223 are stacked in the thickness direction of the electrode assembly 22, and the length direction Y of the first through hole 2421 is parallel to or intersects the thickness direction of the electrode assembly 22, so that the electrolyte solution passing through the first through hole 2421 wets a large portion of the electrode assembly 22, thereby improving the efficiency of wetting the electrode assembly 22 by the electrolyte solution.

According to some embodiments of this application, a plurality of first through holes 2421 are provided, and the plurality of first through holes 2421 are distributed at intervals in the thickness direction of the electrode assembly 22. For example, a plurality of columns of first through holes 2421 are disposed at intervals in the length direction of the bottom insulating portion 242. In each column of first through holes 2421, two first through holes 2421 are spaced apart in the thickness direction of the electrode assembly 22.

In the embodiments in which the electrode assembly 22 is a wound structure, two first through holes 2421 in the thickness direction of the electrode assembly 22 are located on two sides of a winding center of the electrode assembly 22. While a plurality of electrode plates 223 are exposed, the bottom insulating portion 242 can have high strength.

According to some embodiments of this application, embodiments of this application further provide a battery 100. The battery 100 includes the battery cell 20 provided in any foregoing embodiment.

According to some embodiments of this application, embodiments of this application provide a power consuming device. The power consuming device includes the battery cell 20 or the battery 100 provided in any foregoing embodiment. The battery cell 20 or the battery 100 is configured to supply electric energy.

According to some embodiments of this application, referring to FIG. 3 to FIG. 13, embodiments of this application provide a battery cell 20. The battery cell 20 is a cuboid. The battery cell 20 includes a housing 21, an electrode assembly 22, an insulator 24, a separation member 25, and an electrode terminal 23.

The housing 21 includes a shell 211 and an end cover 212. The shell 211 includes a side wall 2111 and a bottom wall 2112. One end of the side wall 2111 is connected to the bottom wall 2112, and an opening is formed at the other end of the bottom wall 2112. The end cover 212 closes the opening of the shell 211. The electrode terminal 23 is disposed at the end cover 212, and the end cover 212 is provided with a liquid injection hole.

The electrode assembly 22 is disposed in the housing 21. A tab 222 of the electrode assembly 22 is electrically connected to the electrode terminal 23. The electrode assembly 22 is provided with a first end surface 22a, and the first end surface 22a is disposed opposite to the bottom wall 2112.

The insulator 24 includes a side insulating portion 241 and a bottom insulating portion 242. The side insulating portion 241 wraps the outer periphery of the electrode assembly 22. The bottom insulating portion 242 is connected to the side insulating portion 241 and wraps the bottom of the electrode assembly 22. The bottom insulating portion 242 is partially located between the first end surface 22a and the bottom wall 2112. An opening is formed at an end of the side insulating portion 241 away from the bottom insulating portion 242, and the opening is disposed facing the end cover 212. The bottom insulating portion 242 is provided with a plurality of first through holes 2421. The first through holes 2421 are strip-shaped holes. A length direction Y of each of the first through holes 2421 is parallel or inclined to a stacking direction of a plurality of electrode plates 223 exposed by the first through hole 2421. The bottom insulating portion 242 is rectangular.

The separation member 25 is a rectangular plate-shaped structure. The separation member 25 is disposed in the housing 21 and is located between the bottom insulating portion 242 and the bottom wall 2112. A length direction of the separation member 25 is parallel to a length direction of the bottom insulating portion 242, and a width direction of the separation member 25 is parallel to a width direction of the bottom insulating portion 242. The separation member 25 is provided with a second through hole 251, and the second through hole 251 does not overlap the first through hole 2421 in a thickness direction Z of the bottom insulating portion 242.

The electrode assembly 22 is a wound structure. The electrode assembly 22 includes a straight region 224 and a corner region 225. The corner region 225 is disposed at two ends of the straight region 224 in a length direction. A plurality of first through holes 2421 are provided. In the thickness direction Z of the bottom insulating portion 242, some of the plurality of first through holes 2421 are right opposite to the straight region 224, and some other of the plurality of first through holes 2421 are right opposite to the corner region 225.

The second through hole 251 is a strip-shaped hole, and a length direction of the second through hole 251 is parallel to a length direction Y of the first through hole 2421. A quantity of the second through holes 251 is greater than a quantity of the first through holes 2421. The plurality of first through holes 2421 and the plurality of second through holes 251 are disposed at intervals in the first direction.

The separation member 25 and the bottom insulating portion 242 are thermally fused to form a plurality of connection portions 252, and the plurality of connection portions 252 are disposed at intervals in the first direction. The first direction is parallel to the length direction of the bottom insulating portion 242. At least one first through hole 2421 and at least one second through hole 251 are disposed between two adjacent connection portions 252 in the first direction.

According to the battery cell 20 in the embodiments of this application, the separation member 25 is provided with a plurality of second through holes 251, the bottom insulating portion 242 is provided with a plurality of first through holes 2421, and the plurality of first through holes 2421 and the plurality of second through holes 251 are disposed at intervals in the first direction, so that an electrolyte solution that accumulates on the bottom wall 2112 of the housing 21 can flow from the second through hole 251 and the first through hole 2421 into an accommodating cavity 240 defined by the insulator 24. A large amount of electrolyte solution wets the electrode assembly 22 from the bottom, so that the efficiency of wetting the electrode assembly 22 can be improved, a wetting interface is favorable, the yield of the battery cell 20 is improved, and the production costs are reduced.

Although this application has been described with reference to preferred embodiments, various improvements can be made thereto and equivalents can be substituted for components thereof without departing from the scope of this application. Especially, as long as there is no structural conflict, the various technical features mentioned in each embodiment can be combined in any way. This application is not limited to the specific embodiments disclosed herein, but includes all technical solutions that fall within the scope of the claims.

## Claims

1. A battery cell, comprising:
a housing;
an electrode assembly, accommodated in the housing, wherein the electrode assembly is formed by winding and/or stacking electrode plates, and the electrode assembly is provided with a first end surface; and
an insulator, at least partially disposed between the first end surface and the housing, wherein
at least one first through hole is provided in a portion of the insulator opposite to the first end surface, the first through hole is a strip-shaped hole, and a length direction of each first through hole is parallel or inclined to a stacking direction of electrode plates exposed by the first through hole.

2. The battery cell according to claim 1, wherein a plurality of first through holes are provided, and the plurality of first through holes are disposed at intervals.

3. The battery cell according to claim 2, wherein the plurality of first through holes are disposed at intervals in an extension direction of the electrode plates.

4. The battery cell according to any one of claims 1 to 3, wherein the first end surface is disposed facing a bottom wall of the housing, the battery cell further comprises a separation member, and the separation member is disposed in the housing and is located between the insulator and the bottom wall; and
the separation member is provided with a second through hole, the second through hole is a strip-shaped hole, and a length direction of the second through hole is parallel to the length direction of the first through hole.

5. The battery cell according to claim 4, wherein in a thickness direction of the bottom wall, the second through hole does not overlap the first through hole.

6. The battery cell according to claim 4 or 5, wherein a quantity of the second through holes is greater than a quantity of the first through holes.

7. The battery cell according to any one of claims 4 to 6, wherein a plurality of second through holes are provided, a plurality of first through holes are provided, and the plurality of first through holes and the plurality of second through holes are disposed at intervals in the extension direction of the electrode plates.

8. The battery cell according to claim 7, wherein the separation member is connected to the insulator to form a plurality of connection portions, at least one first through hole and at least one second through hole are disposed between two adjacent connection portions in a first direction, and the first direction intersects a thickness direction of the electrode assembly.

9. The battery cell according to any one of claims 6 to 8, wherein the separation member is provided with a first surface facing the insulator, the first surface is provided with a first groove, and the first groove is in communication with the first through hole and the second through hole that are adjacent.

10. The battery cell according to any one of claims 7 to 9, wherein in the first direction, a dimension of the battery cell is L1, a distance between the first through hole and the second through hole that are adjacent is L2, 0 < L2 ≤ 0.5L1 is satisfied, and the first direction intersects the thickness direction of the electrode assembly.

11. The battery cell according to claim 10, wherein 1 mm ≤ L2 ≤ 20 mm.

12. The battery cell according to any one of claims 4 to 11, wherein the separation member is provided with a first positioning hole, the first positioning hole penetrates the separation member in the thickness direction of the bottom wall, the insulator is provided with a second positioning hole corresponding to the first positioning hole, and the second positioning hole penetrates the insulator in the thickness direction of the bottom wall.

13. The battery cell according to claim 12, wherein a plurality of first positioning holes are provided, a plurality of second positioning holes are provided, and each of the first positioning holes is disposed corresponding to one second positioning hole.

14. The battery cell according to claim 13, wherein the plurality of second positioning holes are disposed at two ends of the insulator in the first direction, and the first direction intersects the thickness direction of the electrode assembly.

15. The battery cell according to any one of claims 1 to 14, wherein in the thickness direction of the electrode assembly, a dimension of the electrode assembly is W1, a dimension of the first through hole is W2, and 0.1W1 ≤ W2 ≤ W1 is satisfied.

16. The battery cell according to claim 15, wherein 0.2W1 ≤ W2 ≤ 0.7W1.

17. The battery cell according to any one of claims 1 to 16, wherein in the first direction, a dimension of the first through hole is H1, 0.5 mm ≤ H1 ≤ 10 mm is satisfied, and the first direction intersects the thickness direction of the electrode assembly.

18. The battery cell according to claim 17, wherein 1 mm ≤ H1 ≤ 5 mm.

19. The battery cell according to any one of claims 1 to 18, wherein the electrode assembly is a wound structure, the electrode assembly comprises a straight region and a corner region, the corner region is disposed at two ends of the straight region in a length direction, and the first through hole is disposed opposite to the straight region and/or the corner region.

20. The battery cell according to any one of claims 1 to 19, wherein the electrode assembly is a flat structure.

21. A battery, comprising the battery cell according to any one of claims 1 to 20.

22. A power consuming device, comprising the battery cell according to any one of claims 1 to 20 or the battery according to claim 21, wherein the battery cell or the battery is configured to supply electric energy.
